# EUROPEAN PATENT SPECIFICATION

(11) **EP 2 472 685 B1**
(45) Date of publication and mention of the grant of the patent: **27.11.2013**
(21) Application number: 11191578.1
(22) Date of filing: 01.12.2011
(51) Int. Cl.: H02G 3/04, H02G 3/12

(54) **Hollow wall box with fire resistant insert piece**
Hohlwanddose mit feuerfestem Einsatzstück
Boîtier pour mur creux avec piece insert résistante au feu

(30) Priority: 29.12.2010 NL 2005933
(43) Date of publication of application: 04.07.2012
(73) Proprietor: ABB B.V., 6716 AA Ede (NL)
(72) Inventor: Renckens, Thomas Philippus, 3742 ND BAARN (NL)
(74) Representative: Geurts, Franciscus Antonius

(56) References cited:
- EP-A1- 0 476 945
- EP-A1- 1 221 749
- GB-A- 2 325 728

## Description

### BACKGROUND OF THE INVENTION

The invention relates to a hollow-wall box for electric installations.

A hollow-wall box according to the preamble of claim 1 is known from EP 1 221 749 A1.

Known is a hollow-wall box for electric installations, comprising a bottom wall and a circumferential wall upright from the bottom wall which jointly bound an installation space for electric connections. Via a connection opening at the front the installation space is accessible for arranging the electric connections. At the exterior of the circumferential wall, the known hollow-wall box is provided with a fire-resistant layer of intumescent material, that strongly expands when heated. Such hollow-wall boxes are usually placed in a hole for that purpose in a hollow wall. In case of fire, as a result of heating, the intumescent material forms a fire-resistant layer, after which the hollow-wall box with the expanded intumescent material contributes to the fire-resistance of the hollow wall in which it has been mounted.

Due to the disposed intumescent material the known hollow-wall box increases in size, as a result of which the hole in the hollow wall needs to be made larger. This is impractical as in that case deviating drilling tools will have to be used.

It is an object of the invention to provide a fire-resistant hollow-wall box that can be installed using standard tools.

### SUMMARY OF THE INVENTION

According to a first aspect the invention provides a hollow-wall box for arranging electric installations in a hollow wall, comprising a housing provided with a first bottom wall and a first circumferential wall upright from the first bottom wall, wherein the first bottom wall and the first circumferential wall jointly bound an installation space for electric installation material, wherein the first circumferential wall has an installation edge at a mounting side that faces away from the first bottom wall which installation edge bounds a primary opening for arranging the electric installation material, wherein the housing is provided with a first elongated bush and a second elongated bush that are placed opposite each other and, with respect to the first circumferential wall, are receded in the installation space, wherein the first bush and the second bush extend along the first circumferential wall up to or at a short distance from the installation edge, wherein the hollow wall box comprises a fire-resistant insert piece placed separately in the installation space of the housing, which fire-resistant insert piece is provided with a second bottom wall and a second circumferential wall upright from the second bottom wall, wherein the outwardly oriented side of the second circumferential wall is shaped complementarily to the interior side of the first circumferential wall that is oriented towards the installation space and is in abutting contact with it, wherein the fire-resistant insert-piece is provided with a first passage and a second passage for allowing through or keeping free at least a portion of the first bush and the second bush, respectively, situated on or at a short distance from the installation edge.

At the location where the first bush and the second bush extend through the first passage and the second passage, respectively, the available installation space, which in the latitudinal direction is limited to the minimum required installation width between the sides of the first bush and the second bush which sides are oriented towards each other, is not limited by a layer of fire-resistant material of the insert-piece. In that way a compact hollow-wall box having a fire-resistant insert piece can be realised with dimensions similar to those of a hollow-wall box that is not adapted so as to be fire-resistant and with a minimum reduction of the available installation space within the housing.

In one embodiment the first bush and the second bush at their bases extending in the longitudinal direction merge into the first circumferential wall, wherein the second circumferential wall extends up to the bases of the bushes. The second circumferential wall is able to keep the bushes free, while fire-resistant material is provided in the vicinity of the bases.

In one embodiment the first bush and the second bush at the lower side merge into the first bottom wall, wherein the insert piece is provided with a first accommodation space and a second accommodation space, respectively, which are accessible from the outside of the insert piece, wherein the lower sides of the first and the second bush are accommodated in the first accommodation space and the second accommodation space, respectively.

In one embodiment the first bush and the second bush at the sides that face each other from the first passage and the second passage, respectively, are at least partially kept free from the insert piece. The available installation width in the installation space between the bushes can in this way be maintained at the location of the passages, while fire-resistant material is provided in the vicinity.

In one embodiment the first bush and the second bush in the longitudinal direction from the installation edge to at least halfway the depth of the installation space are kept free at the sides that face each other by the first passage and the second passage, respectively. The available installation width in the installation space between the bushes can in this way at least in the upper half of the hollow-wall box near the first installation edge be maintained, while fire-resistant material is provided in the vicinity.

In one embodiment the insert piece is provided with a first stiffening dam, a second stiffening dam, a third stiffening dam and a fourth stiffening dam which are inwardly oriented from the second circumferential wall and which extend along and parallel to the first bush and the second bush. At the location of the stiffening dams the second circumferential wall is interrupted for passage of the bushes, such that the installation width between the bushes is not limited by the presence of the second circumferential wall there, while the stiffening dams provide fire-resistant material in the vicinity of the bushes.

In one embodiment the insert piece is provided with a first stiffening collar and a second stiffening collar that abut the lower side of the first bush and the second bush, respectively. The stiffening collars are able to reinforce the insert piece at the location of the transition from the second circumferential wall to the second bottom wall.

In one embodiment the first stiffening dam and the second stiffening dam are connected to each other at the lower side by the first stiffening collar, wherein the third stiffening dam and the fourth stiffening dam are connected to each other at the lower side by the second stiffening collar, wherein the first stiffening dam, the second stiffening dam and the first stiffening collar jointly bound the passage for the first bush, and wherein the third stiffening dam, the fourth stiffening dam and the second stiffening collar jointly bound the passage for the second bush. The upper edges of the stiffening collars and the stiffening dams can bound oblique passages for keeping the upper side of the bushes free.

In one embodiment the first bush and the second bush at the side oriented towards the primary opening are provided with threaded attachment holes for attaching electric installation material thereto.

In one embodiment the first bush and the second bush form channels that are accessible from the outside of the housing, wherein the hollow wall box is provided with attachment means that engage onto the channels. The attachment means, for instance tearing bands can be used to secure the hollow-wall box in a hole of a hollow wall.

In one embodiment the fire-resistant insert piece is adapted for expansion by heating, wherein the heated, expanded fire-resistant insert piece is adapted for forming a plug that substantially fills the installation space in the housing. The plug may contribute to the fire-resistance of the hollow wall.

In one embodiment the heated, expanded fire-resistant insert piece is adapted for forming a plug that has at least the size of the outer dimensions of the housing. The housing of the hollow-wall box may melt at the temperatures that arise in case of a fire, as a result of which the hole in the hollow wall in which the hollow-wall box is arranged, may get exposed or no longer be closed off. In such a case the plug can expand outwardly beyond the former installation space. In that way the plug is able to contribute as yet to the fire-resistance of the hollow wall.

In one embodiment the fire-resistant insert piece is fire-resistant at least during sixty minutes, preferably at least during seventy minutes, preferably at least during eighty minutes, preferably at least during ninety minutes. The said periods of time increase the chances of the emergency services being able to carry out their work, for instance extinguishing the fire before the flames spread to another room.

In one embodiment the fire-resistant insert piece is manufactured of synthetic material having intumescent properties. The synthetic material having the intumescent properties can in case of heating, for instance when exposed to temperatures that occur in case of a house fire, expand strongly.

In one embodiment the intumescent component of the synthetic fire-resistant insert piece is intumescent graphite. The intumescent graphite can in case of heating, for instance when exposed to temperatures that occur in case of a house fire, expand strongly.

In one embodiment the component of intumescent graphite of the fire-resistant insert piece is at least fifty percentage by weight, preferably at least sixty percentage by weight of the fire-resistant insert piece. In that way the intumescent graphite can in case of heating, for instance when exposed to temperatures that occur in case of a house fire, expand strongly, for instance by at least a factor of one hundred.

In one embodiment the hollow-wall box is provided with a spout portion having a spout that projects to the outside with respect to the first circumferential wall, with at the distal end of the spout an insertion opening for the insertion of an electric wiring line in an insertion direction for passing the wiring through to the installation space, wherein the spout portion is detachably connected to the housing, wherein the spout portion is provided with a retaining part which in the assembled hollow-wall box retains the fire-resistant insert piece within the housing. In that way the hollow-wall box can be assembled prior to it being placed in a hole in a hollow wall, wherein it can be counteracted that the insert piece slides or drops out of the housing.

In one embodiment the second bottom wall of the fire-resistant insert piece is clamped in between or confined between the retaining part and the first bottom wall of the housing. In that way the hollow-wall box can be assembled prior to it being placed in a hole in a hollow wall, wherein it can be counteracted that the insert piece slides or drops out of the housing.

According to a second aspect the invention provides a fire-resistant insert piece, suitable for use in the hollow-wall box according to any one of the preceding claims. The insert piece can be supplied separate from the housing and be placed in the housing in situ. The insert piece could also serve as insert piece in non fire-resistant hollow-wall boxes with a similar housing, in order to make them fire-resistant as yet.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows an isometric view of a hollow-wall box according to the invention in assembled condition, comprising a housing, a spout portion and an insert piece;
figure 2 shows an isometric view of the hollow-wall box according to figure 1 including the housing, the spout portion and the insert piece in exploded condition;
figure 3A shows a top view of the hollow-wall box according to figure 1;
figure 3B shows a side view in cross-section of the hollow-wall box according to the line IIIB-IIIB of figure 3A;
figure 4A shows a top view of the insert piece according to figure 1;
figure 4B shows a side view in cross-section of the insert piece according to the line IVB-IVB of figure 4A;
figure 5 shows a top view of the hollow-wall box according to figure 1, during or after heating the insert piece.

### DETAILED DESCRIPTION OF THE DRAWINGS

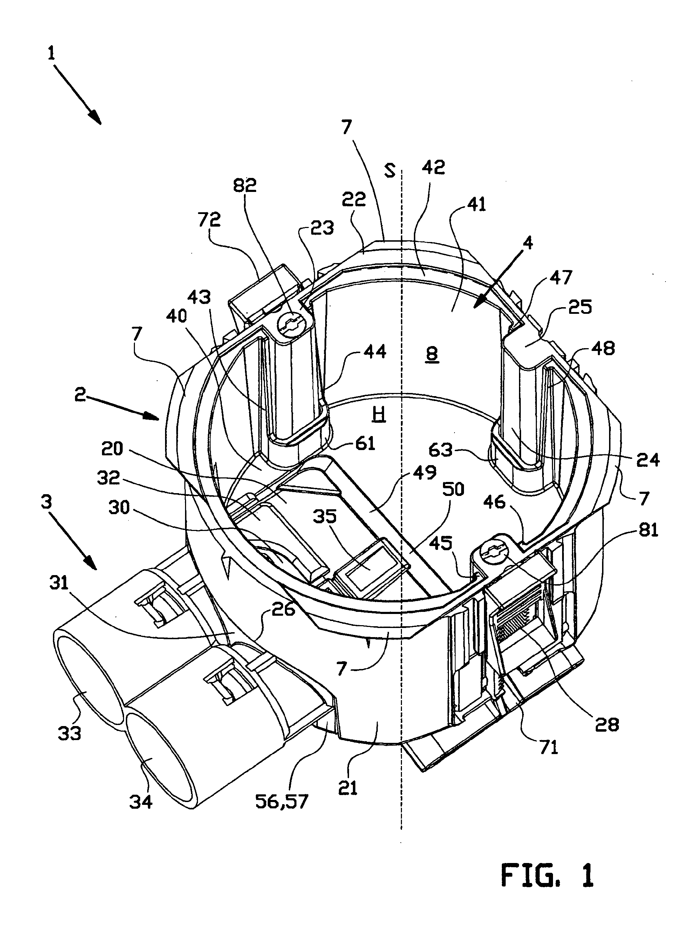

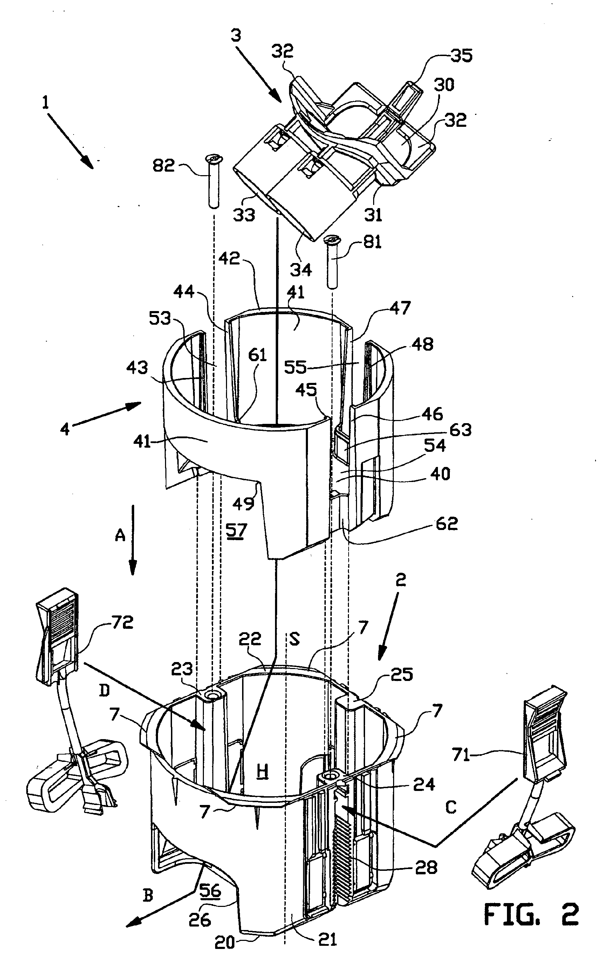

Figure 1 shows an assembled fire-resistant hollow-wall box 1 according to an embodiment of the invention. The hollow-wall box 1 is intended for building in electric installations into a hollow wall and comprises an injection moulded synthetic housing 2, a separate injection moulded synthetic spout portion 3 that has been arranged from within in the housing 2, a separate injection moulded insert piece 4 of intumescent graphite-containing synthetic material placed within the housing 2, and tearing bands 71, 72 for securing the hollow-wall box 1 in a hollow wall. Figure 2 shows the fire-resistant hollow-wall box 1 including the housing 2, the spout portion 3, the insert piece 4 and the tearing bands 71, 72 in exploded condition.

As shown in figure 1, the housing 2 comprises a first bottom wall 20 and a substantially cylindrical first circumferential wall 21 upright from the first bottom wall 20, which circumferential wall has a centre line S that is transverse to the first bottom wall 20. The first bottom wall 20 and the first circumferential wall 21 define or bound an installation space H for accommodation of electric installation material. The first circumferential wall 21 has a first circumferential installation edge 22 that faces away from the first bottom wall 20 and which bounds a primary opening 8 of the hollow-wall box 1 and on which the installation material can be mounted. Examples of installation material are a built-in socket or a switch with a mounting plate that is arranged on the first installation edge 22 and behind it a block with electric connections that is accommodated in the installation space H.

The housing 2 comprises four placement edges 7 all around, which extend to the outside from the first installation edge 22 transverse to the centre line S for abutment against the front surface or sight side of the hollow wall. As shown in figure 2 the housing 2 is provided with a first passage opening 56 that is situated in the transition from the first circumferential wall 21 to the first bottom wall 20, which passage opening 56 is bounded by a first passage opening edge 26 in the first bottom wall 20 and the first circumferential wall 21. In the first passage opening 56 the spout portion 3 is secured from within via the installation space H.

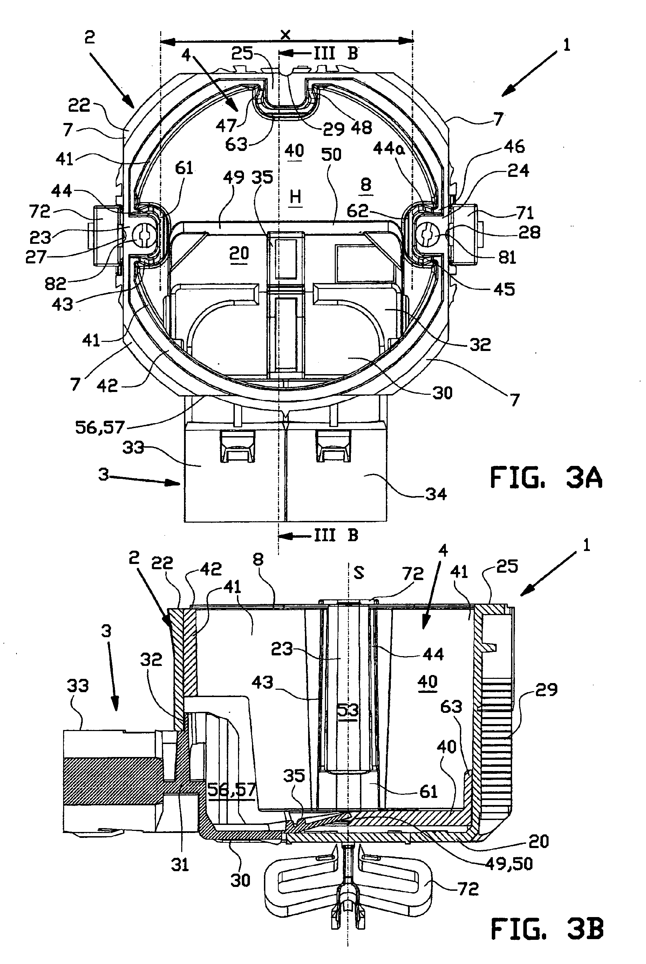

As shown in figures 1, 2 and 3A the housing 2 is provided with an elongated first bush 23, an elongated second bush 24 and an elongated third bush 25 which with respect to the first circumferential wall 21 are receded in the installation space H. In the circumferential direction of the first circumferential wall 21 the bushes 23-25 are positioned at ninety degrees with respect to each other. The bushes 23-25 extend parallel to the centre line S. At the upper side the bushes 23-25 are situated in the plane of the first installation edge 22. At the bases extending in longitudinal direction the bushes 23-25 merge into the first circumferential wall 21 and at the lower side merge into the first bottom wall 20. The first bush 23 and second bush 24 that are situated opposite each other, between the sides that are oriented towards each other limit the available installation space H in the latitudinal direction to a minimum or minimum required installation width X, indicated in figure 3A. The minimum installation width X is required for accommodating the electric installation material in the hollow space H, particularly for the block with connections. At the upper side near the first installation edge 22, the first bush 23 and the second bush 24 are provided with insertion openings having internal thread or a metal nut or lock ring for arranging screws or bolts 81, 82 therein. The screws or bolts 81, 82 can be used for securing the installation material on the first installation edge 22.

On the outside of the housing 2 the first bush 23, the second bush 24 and the third bush 25 form a first channel 27, a second channel 28 and a third channel 29, respectively, that are accessible from the outside and that are provided with internal gear racks with stopping surfaces that face away from the first bottom wall 20. As shown in figure 1 the first tearing band 71, the second tearing band 72 and optionally a third tearing band that is not shown mesh with the gear racks by means of teeth. By means of the tearing band 71, 72, in the manner known to the expert, the hollow-wall box 1 can be secured in a hole for that purpose, that is not shown, in the hollow wall.

As shown in figure 2 the spout portion 3 comprises a bottom wall portion 30 and a circumferential wall portion 31 upright from the bottom wall portion 30 and which extend at the same angle to each other as the bottom wall 20 to the first circumferential wall 21 of the housing 2. The bottom wall portion 30 and the circumferential wall portion 31 connect to the first passage opening edge 26. Around the circumference of bottom wall portion 30 and the circumferential wall portion 31 the spout portion 3 is provided with a circumferential rebate 32. In the assembled condition the spout portion 3 is accommodated in the housing 2 from within wherein the rebate 32 abuts the first passage opening edge 26 all around from the inside.

As shown in figure 2 the spout portion 3 is provided with a first spout 33 and a second spout 34 that extend parallel to each other and to the bottom wall portion 30 at the side of the circumferential wall portion 31 that faces away from the bottom wall portion 30. The spouts 33, 34 are provided with insertion openings that extend through the circumferential wall portion 31 and that internally merge into the installation space H of the housing 2. In the assembled condition of the spout portion 3, as shown in figure 1, the spouts 33, 34, with respect to the first circumferential wall 21 of the housing 2, extend oriented towards the outside beyond the installation space H of the housing 2. As shown in figures 3A and 3B the spout portion 3 comprises a retaining lip 35 which is connected to the bottom wall portion 30. In the assembled condition of the spout portion 3 in the housing 2, the retaining lip 35 extends diagonally from the bottom wall portion 30 over the inside of the first bottom wall 20 of the housing 2 which inside faces the installation space H.

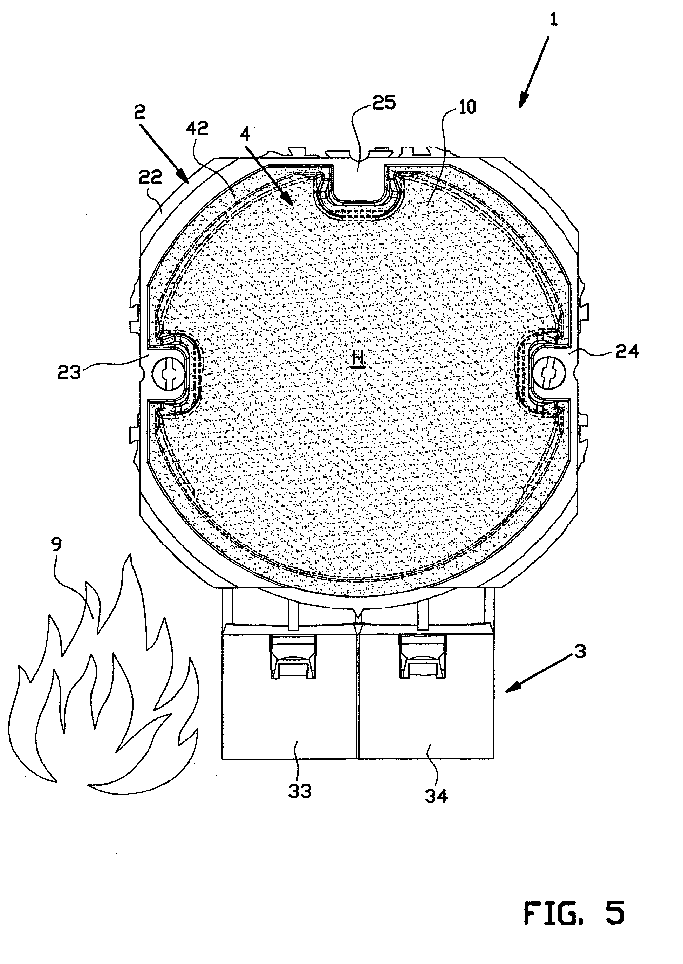

The synthetic insert piece 4, apart from synthetic material consists of a considerable component, preferably at least sixty percentage by weight, most preferably at least seventy percentage by weight of intumescent graphite. The intumescent graphite has the characteristic that at heating, for instance when exposed to flames or temperatures that occur in case of a house fire, it strongly swells, strongly expands or strongly increases in volume, for instance by at least a factor of one hundred, preferably by at least a factor of two hundred. The design and the volume of the unheated insert piece 4 is chosen such that the intumescent graphite during and/or after heating allows the insert piece 4 to increase in volume until at least ninety percent of the free space in the installation space H, and preferably substantially the entire free space in the installation space H is filled with the insert piece 4 that has increased in volume. As shown in figure 5 the insert piece 4 after the strong increase in volume is no longer recognizable as insert piece, but forms a fire-resistant plug 10 of heated, expanded intumescent graphite within the installation space H.

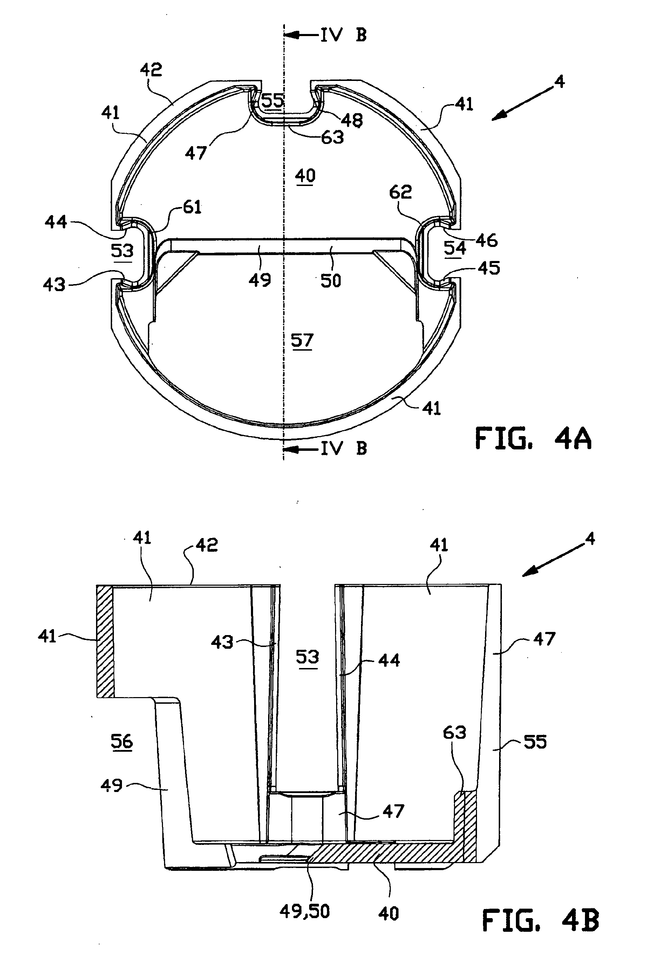

Figures 1-4B show that the insert piece 4 comprises a second bottom wall 40 and a substantially cylindrical second circumferential wall 41 upright from the second bottom wall 40. At the exterior the second circumferential wall 41 is substantially complementarily shaped to the interior side of the first circumferential wall 21 of the housing 2 that faces the installation space H. As the insert piece 4 covers a large inner surface of the housing 2, the required intumescent material of the insert piece 4 can be divided over said large inner surface. As a result the wall thickness for obtaining the required volume of intumescent graphite can be reduced in comparison with a situation in which the intumescent graphite would be arranged in one particular place only in the housing 2, for instance on the first bottom wall 20.

The second circumferential wall 41 has a second circumferential installation edge 42 that faces away from the second bottom wall 40 and that abuts the first installation edge 22 of the housing 2. As shown in figure 2 the insert piece 4 is provided with a second passage opening 57 bounded by a second passage opening edge 49 and left open in the transition from the second circumferential wall 41 to the second bottom wall 40, for passing the spout portion 3 through it to the first passage opening 56. The second passage opening 57 is a few millimetres larger than the first passage opening 56 in order to allow the rebate 32 of the spout portion 3 through.

As shown in figure 3B the second bottom wall 40 of the insert piece 4 adjacent to the second passage opening edge 49 is provided with a bevelling 50. The bevelling 50 is able to guide or bend a draw spring in the direction of the first installation edge 22 of the housing 2, which draw spring is passed through one of the spouts 33, 34 to the hollow space H in the housing 2, in cooperation with the first bottom wall 20 of the housing 2 and the bottom wall portion 30 of the spout portion 3.

As shown in figures 2, 3A and 4A the insert 4 is provided with a first straight stiffening dam 43 and a second straight stiffening dam 44 that are only connected to each other at the lower side by a first stiffening collar 61 upright from the second bottom wall 40. The first stiffening dam 43 and the second stiffening dam 44 are positioned so as to abut the first bush 23 from the basis. The first stiffening collar 61 is positioned so as to abut the lower side of the first bush 23. The first stiffening dam 43, the second stiffening dam 44 and the first stiffening collar 61 jointly define a first accommodation space 53 for the first bush 23, which accommodation space is accessible from the outside. The first stiffening dam 43, the second stiffening dam 44 and the first stiffening collar 61 bound a first passage that is diagonally oriented towards the centre line S, for keeping the upper side of the first bush 23 free.

The insert piece 4 is provided with a third straight stiffening dam 45 and a fourth straight stiffening dam 46 that are only connected to each other at the lower side by a second stiffening collar 62 upright from the second bottom wall 40. The third stiffening dam 45 and the fourth stiffening dam 46 are positioned so as to abut the second bush 24 from the basis. The second stiffening collar 62 is positioned so as to abut the lower side of the second bush 24. The third stiffening dam 45, the fourth stiffening dam 46 and the second stiffening collar 62 jointly define a second accommodation space 54 for the second bush 24, which accommodation space is accessible from the outside. The third stiffening dam 45, the fourth stiffening dam 46 and the second stiffening collar 62 bound a second passage that is diagonally oriented towards the centre line S, for keeping the upper side of the second bush 24 free.

The insert piece 4 is furthermore provided with a fifth straight stiffening dam 47 and a sixth straight stiffening dam 48 that are only connected to each other at the lower side by a third stiffening collar 63 upright from the second bottom wall 40. The fifth stiffening dam 47 and the sixth stiffening dam 48 are positioned so as to abut the third bush 25 from the basis. The third stiffening collar 63 is positioned so as to abut the lower side of the third bush 25. The fifth stiffening dam 47, the sixth stiffening dam 48 and the third stiffening collar 63 jointly define a third accommodation space 55 for the third bush 25, which accommodation space is accessible from the outside. The fifth stiffening dam 47, the sixth stiffening dam 48 and the third stiffening collar 63 bound a third passage that is diagonally oriented towards the centre line S, for keeping the upper side of the third bush 25 free.

A first advantage of the insert piece 4 is that the outer dimensions of the fire-resistant hollow-wall box 1 can remain the same with respect to a regular hollow-wall box that is not adapted so as to be fire-resistant, with a minimum reduction of the available installation space H of the housing 2. At the location where the first accommodation space 53 and the second accommodation space 54 coincide with the first bush 23 and the second bush 24, respectively, the available installation space H, which in the latitudinal direction is limited to the minimum required installation width X between the sides of the first bush 23 and the second bush 24 which sides are oriented towards each other, is not limited by a layer of unheated fire-resistant material or the unheated insert piece 4.

A second advantage of the insert piece 4 is that the insert piece 4 has a large surface area that can simultaneously or evenly be exposed to heat, as a result of which a limited quantity of intumescent graphite remains unused or is shielded by already heated, expanded intumescent graphite.

On the basis of the exploded view according to figure 2 a method for assembling the fire-resistant hollow-wall box 1 is explained below.

The insert piece 4 is placed in direction A in the housing 2, wherein the accommodation spaces 53-55 are aligned in order to coincide with the corresponding bushes 23-25 of the housing 2. Also the first passage opening 56 in the housing 2 and the second passage opening 57 in the insert piece 4 for the purpose of passing the spout portion 3 through it from the installation space H, overlap each other at least partially.

Subsequently the spout portion 3 is inserted in the direction of arrow B via the installation space H with the spouts 33, 34 through the overlapping first passage opening 56 and second passage opening 57 of the housing 2 and the insert piece 4, respectively, wherein the rebate 32 will abut the first passage opening edge 26 of the housing 2 in abutting contact from the inside of the first circumferential wall 21. The rebate 32 prevents that the spout portion 3 falls through the first passage opening 56 of the housing 2. In the assembled situation, as shown in figure 3B, the retaining lip 35 overlaps the second passage opening edge 49 of the second passage opening 57 of the insert piece 4 at least partially, as a result of which the insert piece 4 after placing the spout portion 3 within the housing 2 between the first bottom wall 20 and the retaining lip 35 is secured against the insert piece 4 sliding upwards with respect to the housing 2.

The fire-resistant hollow-wall box 1 can be assembled in the factory in the manner described above, which results in the electrician at the location saving time. The electrician has made a hole that is not shown in the hollow wall, in which the assembled hollow-wall box 1 can be arranged. Electric wiring lines that are not shown with electric wiring can be slid into the spouts in order for the electric wiring in the installation space to make electric connections with the installation material. On the outside of the housing 2 in the channels 27-29, tearing bands 71, 72 can be arranged with which the hollow-wall box 1 can be secured in the hole in the hollow wall. Finally by means of the screws or bolts 81, 82 the installation material that is not shown can be arranged on the hollow-wall box 1.

The hollow wall that is not shown can be made such that it is fire-resistant, for instance due to the material it consists of, by arranging rock wool in or behind the hollow wall and/or by arranging hollow wall elements, such as plaster boards, in double layers, wherein the seams of the hollow wall elements overlap each other. The fire-resistant hollow-wall box 1 according to the invention contributes to the fire-resistance of the hollow wall that may or may not be fire-resistant by in case of heating forming the fire-resistant plug 10, as shown in figure 5. The housing 2 of the hollow-wall box 1 may melt in case of temperatures occurring in case of a fire, as a result of which the hole in which the hollow-wall box 1 is arranged, would become exposed or is no longer closed off. The plug 10 may in such cases expand to the outside beyond the former installation space H of the molten housing 2. The plug 10 counteracts that a seat of fire on the sight side of the hollow wall, via the hole in the hollow wall in which the fire-resistant hollow-wall box 1 is placed, spreads to the space behind the hollow wall. Preferably the fire-resistant plug 10 is fire-resistant during at least sixty minutes, preferably at least during seventy minutes, preferably at least during eighty minutes, most preferably at least during ninety minutes.

In an alternative embodiment that is not shown, the insert piece 4 is designed without a bottom. This is possible when sufficient intumescent graphite can be incorporated in the second circumferential wall 41 in order to be able to fill the complete installation space H of the housing 2 with it, without the available installation space H being further limited than the minimum required installation width X.

The above description is included to illustrate the operation of preferred embodiments of the invention and not to limit the scope of the invention. Starting from the above explanation many variations that fall within the scope of the present invention will be evident to an expert.

## Claims

1. Hollow-wall box (1) for arranging electric installations in a hollow wall, comprising a housing (2) provided with a first bottom wall (20) and a first circumferential wall (21) upright from the first bottom wall (20), wherein the first bottom wall (20) and the first circumferential wall (21) jointly bound an installation space (H) for electric installation material, wherein the first circumferential wall (21) has an installation edge (22) at a mounting side that faces away from the first bottom wall (20) which installation edge (22) bounds a primary opening (8) for arranging the electric installation material, wherein the housing (2) is provided with a first elongated bush (23) and a second elongated bush (24) that are placed opposite each other and, with respect to the first circumferential wall (21), are receded in the installation space (H), wherein the first bush (23) and the second bush (24) extend along the first circumferential wall (21) up to or at a short distance from the installation edge (22), wherein the hollow wall box (1) comprises a fire-resistant insert piece (4) placed separately in the installation space (H) of the housing (2), **characterised in that** the fire-resistant insert piece (4) is provided with a second bottom wall (40) and a second circumferential wall (41) upright from the second bottom wall (40), wherein the outwardly oriented side of the second circumferential wall (41) is shaped complementarily to the interior side of the first circumferential wall (21) that is oriented towards the installation space (H) and is in abutting contact with it, wherein the fire-resistant insert-piece (4) is provided with a first passage and a second passage for allowing through or keeping free at least a portion of the first bush (23) and the second bush (24), respectively, situated on or at a short distance from the installation edge (22).

2. Hollow-wall box (1) according to claim 1, wherein the first bush (23) and the second bush (24) at their bases extending in the longitudinal direction merge into the first circumferential wall (21), wherein the second circumferential wall (41) extends up to the bases of the bushes (23, 24).

3. Hollow-wall box (1) according to claim 1 or 2, wherein the first bush (23) and the second bush (24) at the lower side merge into the first bottom wall (21), wherein the insert piece (4) is provided with a first accommodation space (53) and a second accommodation space (54), respectively, which are accessible from the outside of the insert piece (4), wherein the lower sides of the first and the second bush are accommodated in the first accommodation space and the second accommodation space, respectively.

4. Hollow-wall box (1) according to any one of the preceding claims, wherein the first bush (23) and the second bush (24) at the sides that face each other from the first passage and the second passage, respectively, are at least partially kept free from the insert piece (4), wherein preferably the first bush (23) and the second bush (24) in the longitudinal direction from the installation edge (22) to at least halfway the depth of the installation space (H) are kept free at the sides that face each other by the first passage and the second passage, respectively.

5. Hollow-wall box (1) according to any one of the preceding claims, wherein the insert piece (4) is provided with a first stiffening dam (43), a second stiffening dam (44), a third stiffening dam (45) and a fourth stiffening dam (46) which are inwardly oriented from the second circumferential wall (41) and which extend along and parallel to the first bush (23) and the second bush (24).

6. Hollow-wall box (1) according to any one of the preceding claims, wherein the insert piece (4) is provided with a first stiffening collar (61) and a second stiffening collar (62) that abut the lower side of the first bush (23) and the second bush (24), respectively.

7. Hollow-wall box (1) according to claim 5 and 6, wherein the first stiffening dam (43) and the second stiffening dam (44) are connected to each other at the lower side by the first stiffening collar (61), wherein the third stiffening dam (45) and the fourth stiffening dam (46) are connected to each other at the lower side by the second stiffening collar (62), wherein the first stiffening dam (43), the second stiffening dam (44) and the first stiffening collar (61) jointly bound the passage for the first bush (23), and wherein the third stiffening dam (45), the fourth stiffening dam (46) and the second stiffening collar (62) jointly bound the passage for the second bush (24).

8. Hollow-wall box (1) according to any one of the preceding claims, wherein the first bush (23) and the second bush (24) at the side oriented towards the primary opening (8) are provided with threaded attachment holes for attaching electric installation material thereto.

9. Hollow-wall box (1) according to any one of the preceding claims, wherein the first bush (23) and the second bush (24) form channels (27, 28) that are accessible from the outside of the housing (2), wherein the hollow wall box is provided with attachment means (71, 72) that engage onto the channels (27, 28).

10. Hollow-wall box (1) according to any one of the preceding claims, wherein the fire-resistant insert piece (4) is adapted for expansion by heating, wherein the heated, expanded fire-resistant insert piece is adapted for forming a plug (10) that substantially fills the installation space (H) in the housing (2), wherein preferably the heated, expanded fire-resistant insert piece is adapted for forming a plug (10) that has at least the size of the outer dimensions of the housing (2).

11. Hollow-wall box (1) according to any one of the preceding claims, wherein the fire-resistant insert piece (4) is fire-resistant at least during sixty minutes, preferably at least during seventy minutes, preferably at least during eighty minutes, preferably at least during ninety minutes.

12. Hollow-wall box (1) according to any one of the preceding claims, wherein the fire-resistant insert piece (4) is manufactured of synthetic material having intumescent properties, wherein preferably the intumescent component of the synthetic fire-resistant insert piece (4) is intumescent graphite, wherein preferably the component of intumescent graphite of the fire-resistant insert piece is at least fifty percentage by weight, preferably at least sixty percentage by weight of the fire-resistant insert piece.

13. Hollow-wall box (1) according to any one of the preceding claims, wherein the hollow-wall box (1) is provided with a spout portion (3) having a spout (33, 34) that projects to the outside with respect to the first circumferential wall (21), with at the distal end of the spout an insertion opening for the insertion of an electric wiring line in an insertion direction for passing the wiring through to the installation space (H), wherein the spout portion (3) is detachably connected to the housing (2), wherein the spout portion (3) is provided with a retaining part (35) which in the assembled hollow-wall box (1) retains the fire-resistant insert piece (4) within the housing (2).

14. Hollow-wall box (1) according to claim 13, wherein the second bottom wall (40) of the fire-resistant insert piece (4) is clamped in between or confined between the retaining part (35) and the first bottom wall (20) of the housing (2).

15. Fire-resistant insert piece (4), suitable for use in the hollow-wall box (1) according to any one of the preceding claims.

## Patentansprüche

1. Hohlwanddose (1) zum Anordnen elektrischer Einrichtungen in einer Hohlwand, die ein Gehäuse (2) umfasst, das mit einer ersten Bodenwand (20) und einer ersten Umfangswand (21) versehen ist, die sich senkrecht von der ersten Bodenwand (20) aus erstreckt, wobei die erste Bodenwand (20) und die erste Umfangswand (21) zusammen einen Installationsraum (H) für elektrisches Installationsmaterial begrenzen, die erste Umfangswand (21) eine Installationskante (22) an einer Anbringungsseite aufweist, die von der ersten Bodenwand (20) weggewandt ist, und die Installationskante (22) eine Hauptöffnung (8) zum Anordnen des elektrischen Installationsmaterial begrenzt, das Gehäuse (2) mit einer ersten länglichen Buchse (23) sowie einer zweiten länglichen Buchse (24) versehen ist, die einander gegenüberliegend angeordnet und in Bezug auf die erste Umfangswand (21) in dem Installationsraum (H) zurückgesetzt sind, sich die erste Buchse (23) und die zweite Buchse (24) an der ersten Umfangswand (21) entlang bis zu der Installationskante (22) oder bis kurz vor diese erstrecken und die Hohlwanddose (1) ein feuerbeständiges Einsatzteil (4) umfasst, das separat in dem Installationsraum (H) des Gehäuses (2) angeordnet ist, **dadurch gekennzeichnet, dass** das feuerbeständige Einsatzteil (4) mit einer zweiten Bodenwand (40) und einer zweiten Umfangswand (41) versehen ist, die sich senkrecht von der zweiten Bodenwand (40) aus erstreckt, die nach außen gerichtete Seite der zweiten Umfangswand (41) komplementär zu der Innenseite der ersten Umfangswand (21) geformt ist, die zu dem Installationsraum (H) hin gerichtet ist und in anliegendem Kontakt mit ihr ist, und das feuerbeständige Einsatzteil (4) mit einem ersten Durchlass sowie einem zweiten Durchlass versehen ist, die wenigstens einen Abschnitt der ersten Buchse (23) bzw. der zweiten Buchse (24) durchlassen oder freihalten und sich an der Installationskante (22) oder in einem kurzen Abstand zu ihr befinden.

2. Hohlwanddose (1) nach Anspruch 1, wobei die erste Buchse (23) und die zweite Buchse (24) an ihrer Basis, die jeweils in der Längsrichtung verläuft, in die erste Umfangswand (21) übergehen und sich die zweite Umfangswand (41) bis zu der jeweiligen Basis der Buchsen (23, 24) erstreckt.

3. Hohlwanddose (1) nach Anspruch 1 oder 2, wobei die erste Buchse (23) und die zweite Buchse (24) an der unteren Seite in die erste Bodenwand (21) übergehen, das Einsatzteil (4) mit einem ersten Aufnahmeraum (53) und einen zweiten Aufnahmeraum (54) versehen ist, die jeweils von der Außenseite des Einsatzteils (4) her zugänglich sind, und die unteren Seiten der ersten sowie der zweiten Buchse in dem ersten Aufnahmeraum bzw. dem zweiten Aufnahmeraum aufgenommen werden.

4. Hohlwanddose (1) nach einem der vorangehenden Ansprüche, wobei die erste Buchse (23) und die zweite Buchse (24) an den Seiten, die einander von dem ersten Durchlass bzw. dem zweiten Durchlass aus zugewandt sind, wenigstens teilweise von dem Einsatzteil (4) freigehalten werden und die erste Buchse (23) sowie die zweite Buchse (24) in der Längsrichtung von der Installationskante (22) bis wenigstens ungefähr zur Hälfte der Tiefe des Installationsraums (H) an den einander zugewandten Seiten durch den ersten Durchlass bzw. den zweiten Durchlass vorzugsweise freigehalten werden.

5. Hohlwanddose (1) nach einem der vorangehenden Ansprüche, wobei das Einsatzteil (4) mit einem ersten Versteifungssteg (43), einem zweiten Versteifungssteg (44), einem dritten Versteifungssteg (45) sowie einem vierten Versteifungssteg (46) versehen sind, die von der zweiten Umfangswand (41) aus nach innen gerichtet sind und die an der ersten Buchse (23) sowie der zweiten Buchse (24) entlang und parallel zu ihnen verlaufen.

6. Hohlwanddose (1) nach einem der vorangehenden Ansprüche, wobei das Einsatzteil (4) mit einem ersten Versteifungskragen (61) und einem zweiten Versteifungskragen (62) versehen ist, die an der unteren Seite der ersten Buchse (23) bzw. der zweiten Buchse (24) anliegen.

7. Hohlwanddose (1) nach Anspruch 5 und 6, wobei der erste Versteifungssteg (43) und der zweite Versteifungssteg (44) an der unteren Seite durch den ersten Versteifungskragen (61) miteinander verbunden sind, der dritte Versteifungssteg (45) und der vierte Versteifungssteg (46) an der unteren Seite durch den zweiten Versteifungskragen (62) miteinander verbunden sind, der erste Versteifungssteg (43), der zweite Versteifungssteg (44) und der erste Versteifungskragen (61) zusammen den Durchlass für die erste Buchse (23) begrenzen und der dritte Versteifungssteg (45), der vierte Versteifungssteg (46) und der zweite Versteifungskragen (62) zusammen den Durchlass für die zweite Buchse (24) begrenzen.

8. Hohlwanddose (1) nach einem der vorangehenden Ansprüche, wobei die erste Buchse (23) und die zweite Buchse (24) an der zu der Hauptöffnung (8) hin gerichteten Seite mit Gewinde-Anbringungslöchern zum Anbringen von elektrischem Installationsmaterial daran versehen sind.

9. Hohlwanddose (1) nach einem der vorangehenden Ansprüche, wobei die erste Buchse (23) und die zweite Buchse (24) Kanäle (27, 28) bilden, die von der Außenseite des Gehäuses (2) aus zugänglich sind, und die Hohlraumdose mit Anbringungseinrichtungen (71, 72) versehen ist, die in die Kanäle (27, 28) eingreifen.

10. Hohlwanddose (1) nach einem der vorangehenden Ansprüche, wobei das feuerbeständige Einsatzteil (4) so eingerichtet ist, dass es sich bei Erwärmung ausdehnt, und das erwärmte ausgedehnte feuerbeständige Einsatzteil so eingerichtet ist, dass es einen Stopfen (10) bildet, der im Wesentlichen den Installationsraum (H) in dem Gehäuse (2) ausfüllt, und das erwärmte, ausgedehnte feuerbeständige Einsatzteil vorzugsweise so eingerichtet ist, dass es einen Stopfen (10) bildet, der wenigstens die Größe der Außenabmessungen des Gehäuses (2) hat.

11. Hohlwanddose (1) nach einem der vorangehenden Ansprüche, wobei das feuerbeständige Einsatzteil (4) über wenigstens 60 Minuten, vorzugsweise wenigstens über 70 Minuten, vorzugsweise über wenigstens 80 Minuten, vorzugsweise über wenigstens 90 Minuten feuerbeständig ist.

12. Hohlwanddose (1) nach einem der vorangehenden Ansprüche, wobei das feuerbeständige Einsatzteil (4) aus synthetischem Material hergestellt ist, das Intumeszenz-Eigenschaften aufweist, die intumeszente Komponente des synthetischen feuerbeständigen Einsatzteils (4) vorzugsweise intumeszentes Graphit ist und die Komponente aus intumeszentem Graphit des feuerbeständigen Einsatzteils vorzugsweise wenigstens 50 Gew.-%, vorzugsweise wenigstens 60 Gew.-% des feuerbeständigen Einsatzteils ausmacht.

13. Hohlwanddose (1) nach einem der vorangehenden Ansprüche, wobei die Hohlwanddose (1) mit einem Einlassabschnitt (3) versehen ist, der einen Einlass (33, 34) aufweist, der in Bezug auf die erste Umfangswand (21) nach außen vorsteht, sich am vorderen Ende des Einlasses eine Einführöffnung zum Einführen einer Stromleitung in einer Einführrichtung befindet, die die Leitung in den Installationsraum (H) durchlässt, der Einlassabschnitt (3) abnehmbar mit dem Gehäuse (2) verbunden ist und der Einlassabschnitt (3) mit einem Halteteil (35) versehen ist, der das feuerbeständige Einsatzteil (4) in der zusammengesetzten Hohlwanddose (1) in dem Gehäuse (2) hält.

14. Hohlwanddose (1) nach Anspruch 13, wobei die zweite Bodenwand (40) des feuerbeständigen Einsatzteils (4) zwischen dem Halteteil (35) und der ersten Bodenwand (20) des Gehäuses (2) eingeklemmt oder eingeschlossen ist.

15. Feuerbeständiges Einsatzteil (4), das zur Verwendung in der Hohlwanddose (1) nach einem der vorangehenden Ansprüche geeignet ist.

## Revendications

1. Boîtier pour mur creux (1) pour agencer des installations électriques dans un mur creux, comprenant un boîtier (2) doté d'une première paroi de fond (20) et d'une première paroi circonférentielle (21) droite à partir de la première paroi de fond (20), dans lequel la première paroi de fond (20) et la première paroi circonférentielle (21) délimitent conjointement un espace d'installation (H) pour du matériel d'installation électrique, dans lequel la première paroi circonférentielle (21) a un bord d'installation (22) au niveau d'un côté de montage qui est orienté à l'opposé de la première paroi de fond (20), lequel bord d'installation (22) délimite une ouverture principale (8) pour agencer le matériel d'installation électrique, dans lequel le boîtier (2) est prévu avec une première douille allongée (23) et une seconde douille allongée (24) qui sont placées à l'opposé l'une de l'autre, et par rapport à la première paroi circonférentielle (21), sont éloignées dans l'espace d'installation (H), dans lequel la première douille (23) et la seconde douille (24) s'étendent le long de la première paroi circonférentielle (21) jusqu'à ou à une courte distance du bord d'installation (22), dans lequel le boîtier pour mur creux (1) comprend une pièce rapportée résistante au feu (4) placée séparément dans l'espace d'installation (H) du boîtier (2), **caractérisé en ce que** la pièce rapportée résistante au feu (4) est prévue avec une seconde paroi de fond (40) et une seconde paroi circonférentielle (41) droite à partir de la seconde paroi de fond (40), dans lequel le côté orienté vers l'extérieur de la seconde paroi circonférentielle (41) est formé de manière complémentaire par rapport au côté intérieur de la première paroi circonférentielle (21) qui est orienté vers l'espace d'installation (H) et est en contact de butée avec ce dernier, dans lequel la pièce rapportée résistante au feu (4) est prévue avec un premier passage et un second passage pour permettre le passage à ou laisser libre au moins une partie de la première douille (23) et de la seconde douille (24) respectivement, située sur ou à une courte distance du bord d'installation (22).

2. Boîtier pour mur creux (1) selon la revendication 1, dans lequel la première douille (23) et la seconde douille (24) au niveau de leurs bases, s'étendant dans la direction longitudinale, se rejoignent dans la première paroi circonférentielle (21), dans lequel la seconde paroi circonférentielle (41) s'étend jusqu'aux bases des douilles (23, 24).

3. Boîtier pour mur creux (1) selon la revendication 1 ou 2, dans lequel la première douille (23) et la seconde douille (24), au niveau du côté inférieur, se rejoignent dans la première paroi de fond (21), dans lequel la pièce rapportée (4) est prévue avec un premier espace de logement (53) et un second espace de logement (54), respectivement, qui sont accessibles depuis l'extérieur de la pièce rapportée (4), dans lequel les côtés inférieurs de la première et de la seconde douille sont logés dans le premier espace de logement et le second espace de logement, respectivement.

4. Boîtier pour mur creux (1) selon l'une quelconque des revendications précédentes, dans lequel la première douille (23) et la seconde douille (24) au niveau des côtés qui se font face, respectivement à partir du premier passage et du second passage, sont au moins partiellement dépourvues de la pièce rapportée (4), dans lequel de préférence la première douille (23) et la seconde douille (24) dans la direction longitudinale, à partir du bord d'installation (22) à au moins mi-chemin de la profondeur de l'espace d'installation (H), sont laissées libres, au niveau des côtés qui se font face, par le premier passage et le second passage, respectivement.

5. Boîtier pour mur creux (1) selon l'une quelconque des revendications précédentes, dans lequel la pièce rapportée (4) est prévue avec un premier barrage de renforcement (43), un deuxième barrage de renforcement (44), un troisième barrage de renforcement (45) et un quatrième barrage de renforcement (46) qui sont orientés vers l'intérieur à partir de la seconde paroi circonférentielle (41) et qui s'étendent le long et parallèlement à la première douille (23) et à la seconde douille (24).

6. Boîtier pour mur creux (1) selon l'une quelconque des revendications précédentes, dans lequel la pièce rapportée (4) est prévue avec un premier collier de renforcement (61) et un second collier de renforcement (62) qui viennent en butée contre le côté inférieur de la première douille (23) et de la seconde douille (24), respectivement.

7. Boîtier pour mur creux (1) selon les revendications 5 et 6, dans lequel le premier barrage de renforcement (43) et le deuxième barrage de renforcement (44) sont raccordés entre eux au niveau du côté inférieur, par le premier collier de renforcement (61), dans lequel le troisième barrage de renforcement (45) et le quatrième barrage de renforcement (46) sont raccordés entre eux au niveau du côté inférieur par le second collier de renforcement (62), dans lequel le premier barrage de renforcement (43), le deuxième barrage de renforcement (44) et le premier collier de renforcement (61) délimitent conjointement le passage pour la première douille (23), et dans lequel le troisième barrage de renforcement (45), le quatrième barrage de renforcement (46) et le second collier de renforcement (62) délimitent conjointement le passage pour la seconde douille (24).

8. Boîtier pour mur creux (1) selon l'une quelconque des revendications précédentes, dans lequel la première douille (23) et la seconde douille (24) au niveau du côté orienté vers l'ouverture principale (8), sont prévues avec des trous de fixation filetés pour y fixer le matériel d'installation électrique.

9. Boîtier pour mur creux (1) selon l'une quelconque des revendications précédentes, dans lequel la première douille (23) et la seconde douille (24) forment des canaux (27, 28) qui sont accessibles de l'extérieur du boîtier (2), dans lequel le boîtier pour mur creux est prévu avec des moyens de fixation (71, 72) qui se mettent en prise sur les canaux (27, 28).

10. Boîtier pour mur creux (1) selon l'une quelconque des revendications précédentes, dans lequel la pièce rapportée résistante au feu (4) est adaptée pour s'expanser avec la chaleur, dans lequel la pièce rapportée résistante au feu, expansée, chauffée est adaptée pour former un bouchon (10) qui remplit sensiblement l'espace d'installation (H) dans le boîtier (2), dans lequel de préférence la pièce rapportée résistante au feu, expansée, chauffée est adaptée pour former un bouchon (10) qui a au moins la taille des dimensions externes du boîtier (2).

11. Boîtier pour mur creux (1) selon l'une quelconque des revendications précédentes, dans lequel la pièce rapportée résistante au feu (4) est résistante au feu au moins pendant soixante minutes, de préférence au moins pendant soixante-dix minutes, de préférence au moins pendant quatre-vingt minutes, de préférence au moins pendant quatre-vingt dix minutes.

12. Boîtier pour mur creux (1) selon l'une quelconque des revendications précédentes, dans lequel la pièce rapportée résistante au feu (4) est fabriquée avec un matériau synthétique ayant des propriétés intumescentes, dans lequel de préférence, le composant intumescent de la pièce rapportée résistante au feu (4) est du graphite intumescent, dans lequel de préférence le composant du graphite intumescent de la pièce rapportée résistante au feu représente au moins cinquante pour cent en poids, de préférence au moins soixante pour cent en poids de la pièce rapportée résistante au feu.

13. Boîtier pour mur creux (1) selon l'une quelconque des revendications précédentes, dans lequel le boîtier pour mur creux (1) est prévu avec une partie de bec (3) ayant un bec (33, 34) qui fait saillie à l'extérieur par rapport à la première paroi circonférentielle (21), avec au niveau de l'extrémité distale du bec, une ouverture d'insertion pour l'insertion d'une ligne de câblage électrique dans une direction d'insertion pour y faire passer le câblage jusqu'à l'espace d'installation (H), dans lequel la partie de bec (3) est raccordée de manière détachable au boîtier (2), dans lequel la partie de bec (3) est prévue avec une partie de retenue (35) qui, dans le boîtier pour mur creux (1) assemblé, retient la pièce rapportée résistante au feu (4) à l'intérieur du boîtier (2).

14. Boîtier pour mur creux (1) selon la revendication 13, dans lequel la seconde paroi de fond (40) de la pièce rapportée résistante au feu (4) est serrée entre ou bien confinée entre la partie de retenue (35) et la première paroi de fond (20) du boîtier (2).

15. Pièce rapportée résistante au feu (4), appropriée pour être utilisée dans le boîtier pour mur creux (1) selon l'une quelconque des revendications précédentes.
